Europäisches Patentamt

European Patent Office

Office européen des brevets

(11) Veröffentlichungsnummer : **0 067 952 B1**

(12) **EUROPÄISCHE PATENTSCHRIFT**

(45) Veröffentlichungstag der Patentschrift : 03.04.85

(51) Int. Cl.⁴ : **B 64 C 27/32**, B 64 C 27/72

(21) Anmeldenummer : **82103978.1**

(22) Anmeldetag : **07.05.82**

(54) **Rotor mit einem Blattansschluss am Rotorkopf über einen torsionsweichen sowie schlag- und schwenkbiegeweichen Blatthalsabschnitt.**

(30) Priorität : **11.06.81 DE 3123082**

(43) Veröffentlichungstag der Anmeldung : **29.12.82 Patentblatt 82/52**

(45) Bekanntmachung des Hinweises auf die Patenterteilung : **03.04.85 Patentblatt 85/14**

(84) Benannte Vertragsstaaten : **FR GB IT**

(56) Entgegenhaltungen : **US-A- 3 073 394**

(73) Patentinhaber : **Messerschmitt-Bölkow-Blohm Gesellschaft mit beschränkter Haftung Robert-Koch-Strasse D-8012 Ottobrunn (DE)**

(72) Erfinder : **Stephan, Michael, Dipl.-Ing. Aurikelstrasse 12 D-8012 Ottobrunn (DE)**
Erfinder : **Schwarz, Alois, Dipl.-Ing. Ahornweg 21 D-8011 Putzbrunn (DE)**

## Beschreibung

Die Erfindung betrifft einen Rotor gemäß dem Oberbegriff des Anspruchs 1, wie er durch die DE-OS 27 58 086 bekannt ist.

Ein derartiger Rotor ist wegen des Verzichts auf gesonderte mechanische Blattlager und -gelenke nicht nur relativ einfach im Aufbau bzw. von entsprechend geringerem Baugewicht, sondern auch für Verschleißschäden weniger anfällig als herkömmliche Rotoren. Allerdings bedingt der Verzicht auf Blattwinkellager aus Festigkeitsgründen eine große Baulänge des einzelnen torsionsweichen Blatthalsabschnittes mit der Folge, daß es unter den Blattschlag- und Blattschwenkbewegungen zu beträchtlichen Auslenkungen des Blatt-Halsabschnittes kommt, von denen das torsionssteife Steuerglied, soweit sie dessen Funktionstüchtigkeit mindern, zu entkoppeln ist. Diese Entkopplung geschieht bisher beispielsweise mittels einer besonderen kardanischen, d. h. biegeweichen, aber torsionssteifen Gelenklagerung des Steuergliedes am zugeordneten Blattflügel und Rotorkopf, was natürlich das Schadensrisiko des Rotors bzw. der Blattanstellwinkelsteuerung erhöht.

Bei einem durch die US-A-30 73 394 bekannten Rotor ist ein biegesteifes Blatt-Steuerglied am Rotorkopf in Längsrichtung beweglich gelagert, aber mit dem Rotorblatt schwenkbar verbunden, was diese Verbindung aufwendig macht.

Der Erfindung liegt daher für einen Rotor der eingangs genannten Art die Aufgabe zugrunde, mit einem wesentlich geringeren Lagerungsaufwand das torsionssteife Steuerglied von dem torsionsweichen Blatthalsabschnitt bewegungsmäßig soweit zu entkoppeln, daß es in seiner Funktionserfüllung unbeeinträchtigt ist.

Diese Aufgabe ist durch die im Kennzeichnungsteil des Anspruchs 1 angegebenen Merkmale gelöst. Dem hiernach vorgeschlagenen Verzicht auf Biegesteifigkeit des torsionssteifen Steuergliedes liegt die Erkenntnis zugrunde, daß solcher Verzicht ohne Beeinträchtigung der Torsionssteifigkeit möglich ist, sofern das Steuerglied als ein rohrförmiger Faserwickelkörper mit einem gummielastischen Stoff als Bindungsmasse der Fasern ausgeführt wird. Denn bei einer Faserorientierung vorzugsweise von ± 45° zur Längsachse des Steuergliedes sind die Torsionsmomente für die Blattanstellwinkelbewegungen durch Zugbeanspruchung der Fasern voll aufnehmbar. Bloß unter einer Biegebeanspruchung kommt es zu einer dann erwünschten Verschiebung der Fasern zueinander, was durch die gewählte Bindungsmasse, vorzugsweise ein Polyurethan, gewährleistet wird.

Einzige Bedingung dieses — Gelenklager einsparenden — Steuergliedes ist gemäß Anspruch 1 dessen längsbewegliche Lagerung am Rotorkopf, was mittels einer ohnehin erforderlichen Radiallagerung auf der Basis von Elastomerlagern ohne besonderen Aufwand möglich ist, weil Radialelastomerlager von vornherein axial weich sind.

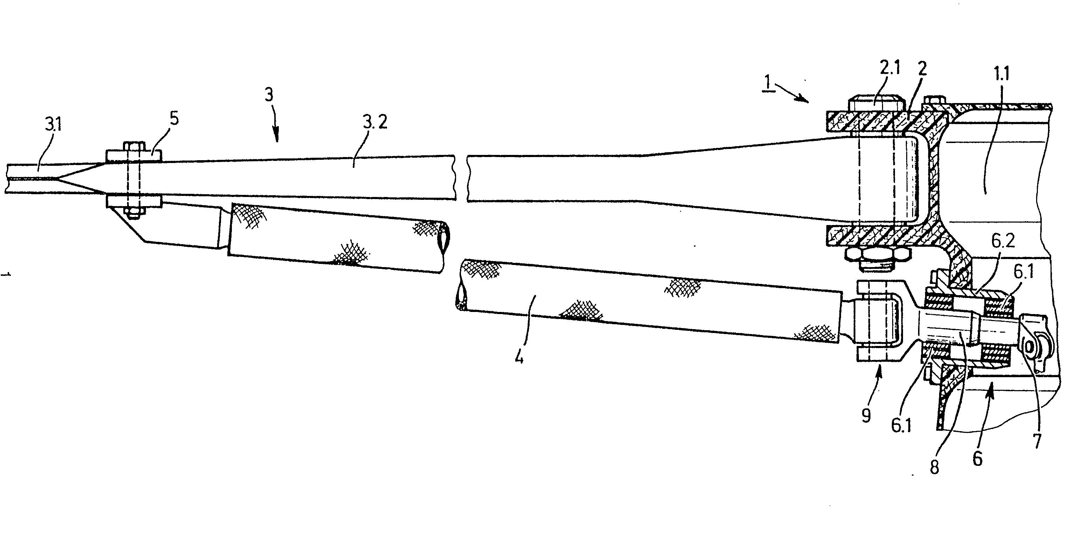

Nachfolgend wird die Erfindung anhand eines Ausführungsbeispiels weiter erläutert. Hierzu zeigt die Zeichnung von einem Rotor eines Drehflugzeugs in der Seitenansicht, teils geschnitten, bloß einen Ausschnitt des Rotorkopfes 1 mit einem seiner gabelförmigen Rotorarme bzw. Blatthalterungen 2 in Verbindung mit einem ebenfalls nur zum Teil dargestellten Rotorblatt 3. Der Rotorkopf 1 erfüllt wie derjenige gemäß der DE-OS 26 58 828 zugleich eine Gehäusefunktion für die Mittel der Blattanstellwinkelsteuerung mit dem Unterschied, daß demgegenüber ein am Blattflügel 3.1 angreifendes Steuergestänge gewählt ist. Denn das einzelne Rotorblatt 3 bzw. dessen Blattflügel 3.1 steht mit der zugeordneten unbeweglichen Blatthalterung 2 bzw. dem zugehörigen Anschlußbolzen 2.1 über einen Blatthalsabschnitt 3.2 in Verbindung, der hinsichtlich der Blattanstellwinkelbewegungen torsionsweich und hinsichtlich der Blattschlag- und Blattschwenkbewegungen biegeweich ist, beispielsweise entsprechend dem Rotorblatt gemäß der DE-AS 28 06 119. Demzufolge ist für die Blattanstellwinkelsteuerung ein Steuerglied 4 erforderlich, das Torsionsmomente vom Rotorzentrum aus durch Drehwinkelbewegungen auf den Blattflügel 3.1 zu übertragen vermag, ohne in seiner Funktion durch Biegebewegungen des Blatthalsabschnittes 3.2 beeinträchtigt zu werden. Deshalb ist das Steuerglied 4 ein rohrförmiger Faserwickelkörper mit einem gummielastischen Stoff, wie Polyurethan, als Bindungsmasse der Fasern, beispielsweise Glas- oder auch Kohlefasern. Die nötige Torsionssteifigkeit des Steuergliedes 4 wird durch die Wahl einer ± 45°-Faserorientierung zu dessen Längsachse sichergestellt. Dagegen wird durch die gummielastische Faserbindungsmasse eine solche Biegeweichheit des Steuergliedes 4 erreicht, daß es trotz der Schlag- und Schwenkbiegung des Blatthalsabschnittes 3.2 mit dem Blattflügel 3.1 einfach, z. B. mittels einer bolzengesicherten Verklammerung 5, starr verbunden werden kann. Andererseits ist bloß wegen der axialen Steifigkeit des Steuergliedes 4 eine längsbewegliche Lagerung 6 am Rotorkopf 1 erforderlich. Für diese Lagerung 6 werden u. U. aus Gründen der Wartungsfreiheit Radialelastomerlager 6.1 bevorzugt, welche zugleich in der dargestellten Anordnung in einer im Rotorkopf-Nabengehäuse 1.1 sitzenden Durchführungshülse 6.2 zur unmittelbaren Lagerung eines das Steuerglied 4 und einen Steuerhebel 7 verbindenden Steuerzapfens 8 eine zusätzliche Gelenkverbindung 9 unter der Forderung nach geringstmöglichem Demontageaufwand für einen Blattfaltvorgang (um den Anschlußbolzen 2.1 als Schwenkachse) ermöglichen.

Im übrigen kann die Blattanstellwinkelsteuerung derjenigen gemäß der vorgenannten DE-OS 26 58 828 entsprechen, von der deshalb lediglich das Ende des von einer sog. Steuerstange betätigten Steuerhebels 7 dargestellt ist.

Schließlich ist auch auf die Bedeutung der Erfindung hinzuweisen, die ihr im Bestreben nach einer Reduzierung des Spiels in der Blattanstellwinkelsteuerung beizumessen ist.

**Ansprüche**

1. Rotor eines Drehflügelflugzeugs, dessen Rotorblätter (3) über je einen hinsichtlich der Blattanstellwinkelbewegungen torsionsweichen sowie schlag- und schwenkbiegeweichen Blatthalsabschnitt (3.2) an steifen Blatthalterungen (2) des Rotorkopfes (1) angeschlossen sind, wobei die Anstellwinkelsteuerung je Rotorblatt (3) vom Rotorzentrum aus durch die Drehwinkelbewegung eines dem Blatthalsabschnitt (3.2) entlang bis zum Blattflügel (3.1) sich erstreckenden torsionssteifen Steuergliedes (4) erfolgt, das mit dem Blattflügel (3.1) starr verbunden ist, dadurch gekennzeichnet, daß das Steuerglied (4) hinsichtlich der Blattschlag- und Blattschwenkbewegungen biegeweich ist und am Rotorkopf (1) in Steuergliedlängsrichtung beweglich gelagert ist.

2. Rotor nach Anspruch 1, dadurch gekennzeichnet, daß das Steuerglied (4) ein rohrförmiger Faserwickelkörper mit einem gummielastischen Stoff als Bindungsmasse der Fasern ist.

3. Rotor nach Anspruch 2, gekennzeichnet durch eine ±45°-Faserorientierung (der Wicklung) zur Längsachse des Steuergliedes (4).

4. Rotor nach Anspruch 2, dadurch gekennzeichnet, daß der gummielastisch Stoff ein Polyurethan ist.

5. Rotor nach Anspruch 1, gekennzeichnet durch eine Radialelastomerlagerung (6) des Steuergliedes (4).

**Claims**

1. A rotor of a rotary-wing aircraft, rotor blades (3) of which are connected to stiff blade holders (2) of rotor bead (1) by way of a respective one of blade neck portions (3.2) each of which is with respect to the blade pitch movements torsionally-soft as well as flap and swivel flexurally-soft, in which respect the pitch control of each rotor blade (3) is effected from the rotor centre through the rotary angle movement of a torsionally stiff control member (4) which extends along the blade neck portion (3.2) as far as blade wing (3.1) and which is rigidly connected to the blade wing (3.1), characterised in that the control member (4) is flexurally-soft with respect to the blade flap and blade swivel movements and is mounted on the rotor head (1) so as to be movable in the longitudinal direction of the control member (4).

2. A rotor according to claim 1, characterised in that the control member (4) is a tubular fibre wound body with a rubber-elastic substance as binding composition for the fibres.

3. A rotor according to claim 2, characterised by a ±45° fibre orientation (of the winding) relative to the longitudinal axis of the control member (4).

4. A rotor according to claim 2, characterised in that the rubber-elastic substance is a polyurethane.

5. A rotor according to claim 1, characterised by a radial elastomer(ic) mounting (6) of the control member (4).

**Revendications**

1. Rotor d'hélicoptère dont les pales (3) sont reliées à des fixations rigides (2) de la tête de rotor (1) chaque fois par un segment de col de pale (3.2) souple en torsion quant aux variations de pas des pales et souple en flexion quant au battement et à la traînée, la commande de pas s'effectuant, pour chaque pole de rotor (3), depuis le centre du rotor par le mouvement angulaire de rotation d'un organe de commande (4) rigide en torsion s'étendant le long dudit segment de col de pale (3.2) jusqu'au corps (3.1) de la pale et relié rigidement à ce dernier, rotor caractérisé par le fait que l'organe de commande (4) est souple en flexion à l'égard des mouvements de battement et de traînée de la pale et est supporté mobile dans sa propre direction longitudinale sur la tête de rotor (1).

2. Rotor selon la revendication 1 caractérisé par le fait que l'organe de commande (4) est un corps bobiné de fibres tubulaire avec une substance à élasticité de caoutchouc comme liant de fibres.

3. Rotor selon la revendication 2 caractérisé par une orientation des fibres (du bobinage) de ±45° par rapport à l'axe longitudinal de l'organe de commande (4).

4. Rotor selon la revendication 2 caractérisé par le fait que la substance à élasticité de caoutchouc est un polyuréthane.

5. Rotor selon la revendication 1 caractérisé par le fait que l'organe de commande (4) est supporté par un palier radial (6) en élastomère.

0 067 952